# FASCICULE DE BREVET EUROPEEN

(11) **EP 3 399 519 B1**
(45) Date de publication et mention de la délivrance du brevet: **12.02.2020**
(21) Numéro de dépôt: 18169070.2
(22) Date de dépôt: 24.04.2018
(51) Int. Cl.: G09G 3/36, H04N 9/31, F21S 41/153

(54) **MODULE LUMINEUX POUR UN VEHICULE AUTOMOBILE CONFIGURE POUR PROJETER UN FAISCEAU LUMINEUX FORMANT UNE IMAGE PIXELISEE**
LEUCHTMODUL FÜR EIN KRAFTFAHRZEUG, DAS ZUM PROJIZIEREN EINES LICHTSTRAHLS KONZIPIERT IST, DER EIN GEPIXELTES BILD ERZEUGT
LIGHT MODULE FOR A MOTOR VEHICLE CONFIGURED TO PROJECT A LIGHT BEAM FORMING A PIXELATED IMAGE

(30) Priorité: 28.04.2017 FR 1753784
(43) Date de publication de la demande: 07.11.2018
(73) Titulaire: Valeo Vision, 93012 Bobigny Cedex (FR)
(72) Inventeur: ALBOU, Pierre, 93012 BOBIGNY Cedex (FR); GODBILLON, Vincent, 93012 BOBIGNY Cedex (FR)
(74) Mandataire: Valeo Vision

(56) Documents cités:
- WO-A1-2017/025445
- FR-A1- 3 041 112
- US-A1- 2008 198 372

## Description

Le domaine technique de l'invention est celui de l'éclairage de véhicule automobile. Elle concerne plus particulièrement un module lumineux apte à projeter une image pixélisée et son intégration dans un projecteur de véhicule automobile.

Les véhicules automobiles sont équipés de dispositifs de projection, de type projecteurs ou phares, destinés à illuminer la route devant le véhicule, la nuit ou en cas de luminosité réduite, par un faisceau lumineux global. Ces projecteurs, un projecteur gauche et un projecteur droit, comportent respectivement un ou plusieurs modules lumineux adaptés à générer et diriger un faisceau lumineux partiel dont l'addition forme ledit faisceau lumineux global.

Outre ces fonctions d'éclairage réglementaires, indispensables pour la sécurité de l'ensemble des usagers de la route, les constructeurs et équipementiers automobiles visent à proposer des dispositifs facilitant la conduite et notamment la présentation d'informations relatives à l'état du véhicule, la détection d'une situation d'urgence ou la présentation d'information de navigation. Des modules lumineux de projection d'information sur la scène de route ont par exemple été développés afin d'éviter au conducteur d'avoir à détourner le regard de la scène de route pour visualiser ces informations. Plus précisément, ces modules lumineux sont configurés pour projeter une information en amont du véhicule par rapport à son sens d'avancement lorsqu'il s'agit d'une information à visualiser par les occupants du véhicule, ou en aval du véhicule lorsqu'il s'agit d'une information à visualiser par les occupants d'un véhicule suiveur. L'information à visualiser est projetée sur la route sous la forme d'une image pixélisée présentant une forme de pictogramme, simple à comprendre, par exemple une flèche, lorsque le dispositif de navigation par satellite associée au véhicule détecte un virage à venir, ou un point d'exclamation lorsqu'une situation d'urgence implique une immobilisation rapide du véhicule, etc.

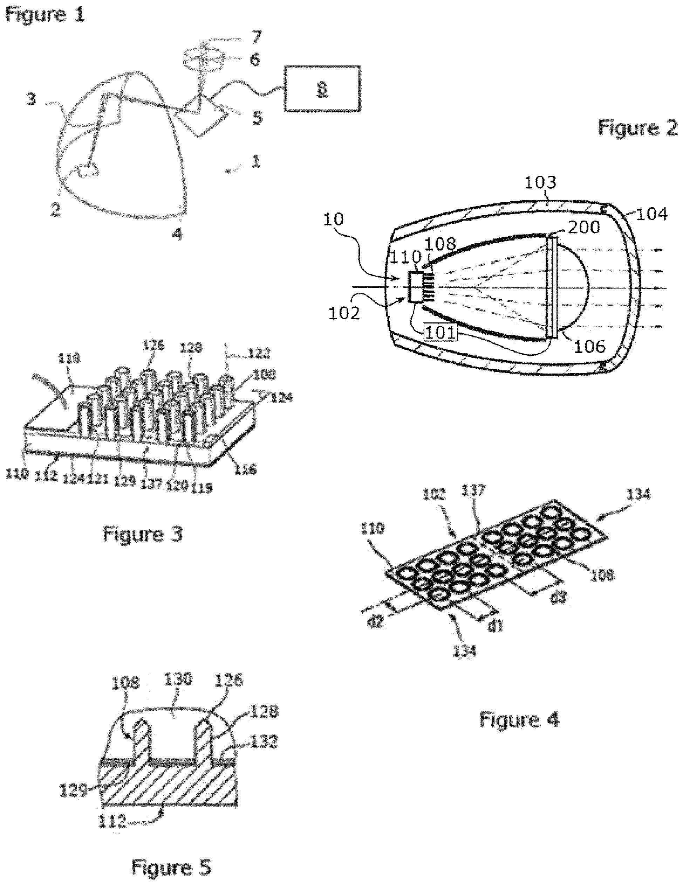

La figure 1 illustre un exemple de module lumineux 1 du type DMD (d'après l'acronyme signifiant en anglais « Digital Micromirror Device ») configuré pour projeter un faisceau lumineux formant une image pixélisée. Pour cela, le module lumineux comporte une source de lumière 2 émettant un faisceau lumineux 3 en direction d'un réflecteur 4, configuré pour dévier les rayons du faisceau vers une matrice de micromiroirs 5. La source de lumière est disposée au voisinage du foyer image du réflecteur et la matrice de micromiroirs est disposée au voisinage du foyer image dudit réflecteur, de sorte que les rayons réfléchis par la surface interne réfléchissante du réflecteur sont concentrés sur la matrice de micromiroirs 5, en illuminant l'ensemble des micromiroirs. La matrice de micromiroirs comprend des miroirs pilotables en rotation indépendamment des uns des autres. A titre d'exemple non limitatif, la matrice de micromiroirs 5 est de forme carrée et elle est délimitée par 500 à 800 miroirs sur chacun de ses côtés, chaque miroir pouvant présenter une taille de l'ordre de 7 à 10 micromètres. Plus précisément, chaque micromiroir est monté pivotant autour d'un axe, entre une position active dans laquelle le micromiroir réfléchit le faisceau lumineux incident en direction du système optique de projection, et une position passive dans laquelle le micromiroir réfléchit le faisceau lumineux incident en direction d'un élément absorbeur de rayonnement lumineux non représenté sur la figure 1. Une fois réfléchi par une partie au moins des micromiroirs, le faisceau lumineux passe au travers d'un dioptre 6 du module lumineux 1 pour projeter le faisceau lumineux.

Ce module lumineux 1 permet de disposer en sortie du dioptre 6 d'un faisceau lumineux 7 hautement résolu pixellisé et digitalisé, qui forme tout ou partie de l'image pixellisée que l'on souhaite projeter sur la scène de route. Chaque pixel ou rayon pixellisé composant ce faisceau lumineux 7 correspond à une partie du faisceau d'origine 3 dévié par un micromiroir, et il est alors possible d'activer ou non ces micropixels en pilotant chaque micromiroir par l'intermédiaire d'un module de commande 8. Cette particularité permet alors de dessiner au besoin la forme du faisceau lumineux 7 en sortie du dioptre 6 selon les besoins de marquage sur la route, et notamment pour représenter sur la zone projetée en amont du véhicule un pictogramme. Un module lumineux du type DMD tel que décrit ci-dessus permet donc la projection sur la route d'images pixélisées.

La résolution des images pixélisées dépend du nombre de micromiroirs pilotables. Les mécanismes mis en œuvre pour pivoter les micromiroirs sont sensibles aux vibrations et aux variations de température et on comprend que la mise en œuvre d'une matrice de micromiroirs mobiles est d'autant plus fragile que le nombre de micromiroirs est élevé par rapport à la taille de la matrice, cette taille étant elle-même limitée par le coût du composant. L'utilisation des dispositifs de type DMD à très haute résolution dans des projecteurs de véhicule automobile est donc à l'heure actuelle délicate en raison du risque élevé de casse des mécanismes de pivotement des micromiroirs.

La présente invention s'inscrit dans ce contexte et vise à proposer un module lumineux pour véhicule automobile qui permet la projection d'images pixélisées avec un nombre d'éléments actifs, du type des micromiroirs présentés ci-dessus, qui soit réduit, afin de diminuer les coûts de revient et/ou de limiter les risques de dysfonctionnement.

Pour cela, l'invention propose un module lumineux pour un véhicule automobile, configuré pour projeter un faisceau lumineux formant une image pixélisée. Le module lumineux comprend une source de lumière et un dispositif de traitement de la lumière émise par la source de lumière. Plus précisément, le dispositif de traitement comporte une matrice d'éléments actifs, les éléments actifs étant configurés pour traiter au moins une partie du faisceau lumineux émis par la source de lumière de manière à former l'image pixellisée. Par « élément actif», on entend ici une surface apte à transmettre au moins partiellement la lumière qui l'éclaire en direction d'une scène souhaitée, par exemple une scène de route, lorsque l'élément actif est activé.

L'invention se caractérise en ce que la source de lumière comporte une matrice d'éléments émissifs, parmi lesquels au moins deux éléments émissifs sont activables sélectivement et en ce que la matrice d'éléments émissifs et la matrice d'éléments actifs sont décalées l'une par rapport à l'autre, de manière à ce que chaque élément actif est agencé en travers d'une partie du faisceau lumineux émis par un élément émissif.

Par « en travers d'une partie du faisceau lumineux », on comprend que chaque élément actif se retrouve en travers seulement d'une partie du faisceau émis par l'élément émissif, c'est-à-dire que chaque élément actif se retrouve impacté seulement par cette partie du faisceau émis par l'élément émissif, que ce soit pour réfléchir ou réfracter les rayons. Le reste des rayons formant ce faisceau lumineux émis par un élément émissif est dirigé vers l'extérieur de la matrice d'élément actifs ou sur un autre élément actif de cette matrice. De ce fait, lorsqu'un élément actif est activé et éclairé par un seul élément émissif, l'élément actif transmet une partie du faisceau lumineux émis par ledit élément émissif. Le faisceau lumineux transmis se projette alors sur une scène souhaitée en formant un pixel. On comprend que le faisceau lumineux d'un élément émissif éclaire une partie seulement de la surface d'un élément actif. Ainsi, pour éclairer la surface entière d'un élément actif, il est nécessaire d'activer au moins deux éléments émissifs. De ce fait, lorsque le même élément actif est activé et éclairé par plusieurs éléments émissifs, l'élément actif transmet plusieurs parties de faisceaux lumineux émis par les éléments émissifs. Les faisceaux lumineux transmis forment alors plusieurs pixels de l'image pixélisée. On comprend donc que l'on peut former au moins deux pixels d'une image pixélisée, en activant seulement un élément actif. De ce fait, grâce à l'invention, l'activation d'un seul élément actif peut permettre de former un ou plusieurs pixels en activant un ou plusieurs éléments émissifs, chaque élément émissif éclairant partiellement l'élément actif. Ainsi, par rapport au dispositif de l'état de la technique décrit ci-dessus, pour une résolution d'image identique, l'invention permet avantageusement d'utiliser moins de micromiroirs, ce qui permet de prévoir un dispositif de traitement plus petit, et donc meilleur marché, ou bien d'utiliser des micromiroirs plus grands, ce qui permet d'augmenter la fiabilité de ces éléments actifs.

En d'autres termes, on peut comprendre que les matrices sont décalées en ce que dans chaque matrice, les éléments qui la composent sont séparés par des lignes de démarcation, et que en considérant la matrice d'éléments actifs du dispositif de traitement d'une part et l'image de la matrice d'éléments émissifs de la source telle qu'elle est projetée sur la matrice d'éléments actifs du dispositif de traitement d'autre part, les lignes de démarcation ne se superposent pas.

Selon une caractéristique de l'invention, chaque élément émissif peut être configuré pour éclairer au moins deux éléments actifs adjacents. De façon préféré, chaque élément émissif est configuré pour éclairer au moins quatre éléments actifs adjacents. Et de façon concomitante, chaque élément actif est configuré pour être éclairé par au moins quatre éléments émissifs. On comprend qu'en augmentant le nombre d'éléments émissifs pour éclairer la totalité d'un élément actif, on augmente le nombre de pixels que l'élément actif peut former sur l'image. Autrement dit, pour une image de même résolution, on diminue le nombre d'éléments actifs pour former ladite image.

Selon une autre caractéristique de l'invention, la surface de la matrice d'éléments émissifs peut être plus grande que la surface de la matrice d'éléments actifs. On s'assure ainsi que chaque élément actif délimitant les bords de la matrice a sa surface entièrement éclairée par plusieurs éléments émissifs.

Selon une autre caractéristique, la surface d'au moins un élément émissif peut être égale à la surface d'au moins un élément actif. De préférence, les surfaces des éléments émissifs et des éléments actifs sont identiques afin de faciliter l'alignement optique entre la matrice d'éléments émissifs et la matrice d'éléments actifs, avec un décalage constant entre les éléments émissifs et les éléments actifs.

On comprend, dans les deux caractéristiques qui précèdent, que la comparaison surfacique peut être faite entre une surface projetée de l'au moins un élément émissif sur la matrice d'éléments actifs et la surface de l'au moins un élément actif, dès lors que l'élément émissif est projeté avec un agrandissement spécifique. Ceci permet de dimensionner au plus petit la taille des sources de lumière.

Selon une autre caractéristique, la surface de projection sur le dispositif de traitement d'un faisceau lumineux émis par un élément émissif peut être égale à la surface d'au moins un élément actif.

Selon une autre caractéristique, le module lumineux peut comprendre une première optique de projection agencée en vis-à-vis de la matrice d'éléments actifs, de manière à projeter l'image pixélisée à l'extérieur du dispositif. L'optique de projection comprend au moins un élément optique tel qu'une ou plusieurs lentilles, un ou plusieurs réflecteurs, un ou plusieurs guides de lumière, ou une combinaison de ces possibilités. Chacun des éléments optiques cités pourrait présenter des formes variées.

Selon une autre caractéristique, au moins un élément actif peut réfléchir une partie du faisceau lumineux émis par un élément émissif. Selon un mode de réalisation préféré, la matrice d'éléments actifs peut comprendre une pluralité de micromiroirs mobiles en rotation du type DMD. Dans ce cas, l'optique de projection et la source de lumière peuvent être placées du même côté du dispositif de traitement.

Selon une autre caractéristique, au moins un élément actif peut être configuré pour réfracter une partie du faisceau lumineux émis par un élément émissif. Au moins un élément actif peut prendre la forme d'un cristal liquide. Notamment, la matrice d'éléments actifs peut former un écran de type LCD. Dans ce cas, l'optique de projection et la source de lumière peuvent être placées de part et d'autre du dispositif de traitement. Selon une alternative de réalisation, la source de lumière peut alors être accolée au dispositif de traitement.

Selon une autre caractéristique, le module lumineux comprend une deuxième optique de projection agencée entre la source de lumière et le dispositif de traitement, de manière à projeter sur la matrice d'éléments actifs au moins une partie de la lumière émise par la source de lumière. L'optique de projection comprend au moins un élément optique tel qu'une ou plusieurs lentilles, un ou plusieurs réflecteurs, un ou plusieurs guides de lumière, ou une combinaison de ces possibilités. Chacun des éléments optiques cités pourrait présenter des formes variées.

Selon une autre caractéristique, le module lumineux peut comprendre un module de commande configuré pour piloter simultanément l'allumage et/ou l'extinction des éléments émissifs d'une part, et la configuration des éléments actifs du dispositif de traitement d'autre part. Par les termes « piloter (...) la configuration des éléments actifs », on entend la possibilité pour le module de commande de pivoter un ou plusieurs micromiroirs mobiles lorsque la matrice d'éléments actifs est de type DMD, ou de modifier la transmittance d'une ou plusieurs cellules à cristaux liquides lorsque la matrice d'éléments actifs est un écran de type LCD.

Selon une autre caractéristique, chaque élément émissif peut comprendre un ou plusieurs bâtonnets électroluminescents de dimensions submillimétriques pour émettre un faisceau lumineux. Ainsi, on applique au domaine automobile une technologie consistant à réaliser la partie émettrice de lumière par une pluralité de bâtonnets électroluminescents que l'on fait croître sur un substrat, pour réaliser une topologie en trois dimensions. On comprend que cette topologie en trois dimensions présente l'avantage de multiplier la surface d'émission lumineuse par rapport aux diodes électroluminescentes connues jusque-là dans le domaine de l'automobile, à savoir des diodes sensiblement planes. De la sorte, il est possible de fournir à moindre coût de revient une lumière très lumineuse.

Le fait que les éléments émissifs, et notamment dans ce cas les bâtonnets électroluminescents, soient activables sélectivement, rendant possible qu'au moins deux éléments émissifs de la source de lumière soient agencés pour être allumés de manière sélective, et le fait que soit prévu un module de contrôle de l'allumage distinct de ces éléments émissifs, permettant d'allumer ou d'éteindre distinctivement les uns des autres chaque élément émissifs, simultanément ou non, permet la réalisation d'une lumière pixellisée, qui peut évoluer en fonction de l'image pixélisée que l'on souhaite projeter.

Les bâtonnets électroluminescents peuvent s'étendre en saillie d'un substrat, et ils peuvent notamment être formés directement sur ce substrat. On peut prévoir que le substrat soit à base de silicium ou de carbure de silicium. On comprend que le substrat est à base de silicium dès lors qu'il comporte majoritairement du silicium, par exemple au moins 50% et dans la pratique environ 99%.

Selon une série de caractéristiques propres à la constitution des bâtonnets électroluminescents et à la disposition de ces bâtonnets électroluminescents sur le substrat, on pourra prévoir que, chaque caractéristique pouvant être prise seule ou en combinaison avec les autres :
- chaque bâtonnet présente une forme générale cylindrique, notamment de section polygonale ; on pourra prévoir que chaque bâtonnet ait la même forme générale, et notamment une forme hexagonale ;
- les bâtonnets sont chacun délimités par une face terminale et par une paroi circonférentielle qui s'étend le long d'un axe longitudinal du bâtonnet définissant sa hauteur, la lumière étant émise au moins à partir de la paroi circonférentielle ; cette lumière pourrait également être émise par la face terminale ;
- chaque bâtonnet peut présenter une face terminale qui est sensiblement perpendiculaire à la paroi circonférentielle, et dans différentes variantes, on peut prévoir que cette face terminale est sensiblement plane ou bombée, ou pointue, en son centre ;

- les bâtonnets sont agencés en matrice à deux dimensions, que cette matrice soit régulière, avec un espacement constant entre deux bâtonnets successifs d'un alignement donné, ou que les bâtonnets soient disposés en quinconce ;
- la hauteur d'un bâtonnet est comprise entre 1 et 10 micromètres ;
- la plus grande dimension de la face terminale est inférieure à 2 micromètres ;
- la distance qui sépare deux bâtonnets immédiatement adjacents est au minimum égale à 2 micromètres, et au maximum égale à 100 micromètres.

Selon d'autres caractéristiques, on pourra prévoir que la source de lumière à semi-conducteur comprenant une pluralité de bâtonnets électroluminescents de dimensions submillimétriques comporte en outre une couche d'un matériau polymère formant un encapsulant dans lequel les bâtonnets sont au moins partiellement noyés ; un tel encapsulant est déposé sur le substrat en recouvrement des bâtonnets, et il est avantageux que l'encapsulant s'étende au moins jusqu'à recouvrir le bâtonnet le plus haut. Ce matériau polymère peut être à base de silicone, étant entendu que le matériau polymère est à base de silicone dès lors qu'il comporte majoritairement du silicone, par exemple au moins 50% et dans la pratique environ 99%. La couche de matériau polymère peut comprendre un luminophore ou une pluralité de luminophores excités par la lumière générée par au moins un de la pluralité de bâtonnets. On entend par luminophore, ou convertisseur de lumière, la présence d'au moins un matériau luminescent conçu pour absorber au moins une partie d'au moins une lumière d'excitation émise par une source de lumière et pour convertir au moins une partie de ladite lumière d'excitation absorbée en une lumière d'émission ayant une longueur d'onde différente de celle de la lumière d'excitation. Ce luminophore, ou cette pluralité de luminophores, peut être au moins partiellement noyé dans le polymère ou bien disposé en surface de la couche de matériau polymère.

Alternativement, selon une autre caractéristique, chaque élément émissif peut comprendre un ou plusieurs plots électroluminescents de dimensions submillimétriques pour émettre un faisceau lumineux. Ces plots sont formés par épitaxie, notamment d'une première couche en GaN dopée n et d'une seconde couche en GaN dopée p, sur un substrat unique, par exemple en carbure de silicium, l'ensemble étant découpé (par meulage et/ou ablation) pour former une pluralité de pixels respectivement issus d'un même substrat. Il résulte d'une telle conception une pluralité de blocs électroluminescents tous issus d'un même substrat et connectés électriquement pour être activables sélectivement les uns des autres. Le substrat unique peut présenter une épaisseur comprise entre 100 µm et 800 µm, notamment égale à 200 µm ; chaque bloc peut présenter une largeur et une longueur, chacune étant comprise entre 50 µm et 500 µm, préférentiellement comprise entre 100 µm et 200 µm. Dans une variante, la longueur et la largeur sont égales. La hauteur de chaque bloc est inférieur à 500 µm, préférentiellement inférieur à 300 µm. Enfin la surface de sortie de chaque bloc peut être faite via le subtrat du côté opposée à l'épitaxie. La distance de séparation entre deux pixels. La distance entre chaque pixel contigü peut être inférieure à 1 mm, notamment inférieure à 500 µm, et elle est préférentiellement inférieure à 100 µm, et encore plus préférentiellement inférieure à 20 µm.

Le fait que les éléments émissifs, et notamment dans ce cas les plots électroluminescents, soient activables sélectivement, rendant possible qu'au moins deux éléments émissifs de la source de lumière soient agencés pour être allumés de manière sélective, et le fait que soit prévu un module de contrôle de l'allumage distinct de ces éléments émissifs, permettant d'allumer ou d'éteindre distinctivement les uns des autres chaque élément émissifs, simultanément ou non, permet la réalisation d'une lumière pixellisée, qui peut évoluer en fonction de l'image pixélisée que l'on souhaite projeter.

L'invention concerne également un dispositif lumineux de véhicule automobile comportant au moins l'un des modules lumineux décrits ci-dessus. Ce dispositif lumineux peut consister en un projecteur, un feu arrière, ou encore un système d'éclairage intérieur. L'invention concerne aussi un véhicule automobile comportant un tel projecteur.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

D'autres caractéristiques et avantages de la présente invention apparaitront plus clairement à l'aide de la description et des dessins parmi lesquels :
- la figure 1 est une représentation schématique d'un module lumineux configuré pour projeter une image pixellisée ; et
- la figure 2 est une vue de côté d'un module lumineux selon l'invention, dans lequel on a illustré une source de lumière à semi-conducteur en regard d'un dispositif de traitement de la lumière émise par la source de lumière ;
- la figure 3 est une représentation schématique, en perspective, de la source de lumière à semi-conducteur de la figure 2, comportant une pluralité de bâtonnets électroluminescents en saillie d'un substrat, dans laquelle on a rendu visible en coupe une rangée de bâtonnets électroluminescents ;
- la figure 4 est une illustration schématique de l'agencement de bâtonnets électroluminescents sur une source lumineuse selon l'invention, avec ici deux zones de bâtonnets électroluminescents activables sélectivement ;
- la figure 5 est une vue en coupe d'un détail d'un mode de réalisation particulier d'une source de lumière à semi-conducteur selon l'invention, dans lequel deux bâtonnets électroluminescents s'étendent en saillie d'un substrat, lesdits bâtonnets électroluminescents étant encapsulés dans une couche protectrice ;
- la figure 6 est une vue de face d'une matrice d'éléments émissifs, chaque élément émissif comprenant un ou plusieurs bâtonnets électroluminescents de la source de lumière telle que représentée aux figures 3 à 5 ;
- la figure 7 est une vue de face illustrant la superposition d'une matrice d'éléments actifs d'un dispositif de traitement de lumière utilisé dans le module lumineux présenté à la figure 1 et de l'image projetée de la matrice d'éléments émissifs de la figure 6 ;
- la figure 7A est une vue de face d'un élément actif de la matrice d'éléments actifs qui est désactivé, positionné devant l'image de quatre éléments de la matrice d'émission qui sont activés ;
- la figure 7B est une vue de face d'un élément actif de la matrice d'éléments actifs qui est activé, positionné devant l'image de quatre éléments de la matrice d'émission qui sont activés ;
- la figure 7C est une vue de face d'un élément actif de la matrice d'éléments actifs qui est activé, positionné devant l'image de trois éléments de la matrice d'émission qui sont activés et l'image d'un élément de la matrice d'émission qui est désactivé ;
- la figure 7D est une vue de face d'un élément actif de la matrice d'éléments actifs qui est activé, positionné devant l'image de deux éléments de la matrice d'émission qui sont activés et l'image de deux éléments de la matrice d'émission qui sont désactivés ;
- la figure 8 est une représentation schématique d'un deuxième mode de réalisation d'un module lumineux selon l'invention ;
- la figure 9 est une vue illustrant la superposition d'une matrice d'éléments actifs d'un dispositif de traitement de lumière utilisé dans le module lumineux présenté à la figure 8 et de l'image projetée d'une matrice d'éléments émissifs de la source de lumière utilisé dans ce module lumineux de la figure 8.

Pour rappel, l'invention propose un module lumineux pour un véhicule automobile, configuré pour projeter un faisceau lumineux formant une image pixélisée sur une scène de route. Le module lumineux 10, décrit ci-après, comprend un module de commande 101, une source de lumière 102 pilotée par le module de commande, un dispositif de traitement de lumière 200 émise par la source de lumière et également pilotée par le module de commande 101.

Tel qu'illustré à la figure 2, le module lumineux 10 est logé dans dispositif lumineux, ici un phare de véhicule automobile, formé d'un boîtier 103 fermé par une glace 104. Selon le présent exemple, le module lumineux 10 comprend une première optique 106 de mise en forme d'une partie au moins des rayons lumineux émis par une source de lumière 102. La première optique 106 est configurée pour changer une direction d'au moins une partie des rayons lumineux émis par la source de lumière 102.

La source de lumière 102 est une source à semi-conducteur comprenant des éléments émissifs et plus particulièrement des bâtonnets électroluminescents de dimensions submillimétriques, c'est-à-dire des sources à semi-conducteur en trois dimensions tel que cela sera exposé ci-après, contrairement aux sources classiques en deux dimensions, assimilées à des sources sensiblement planes du fait de leur épaisseur de l'ordre de quelques nanomètres alors qu'une source à bâtonnets électroluminescents présente une hauteur au moins égale au micromètre.

Tel qu'illustré à la figure 3, la source de lumière 102 comprend une pluralité de bâtonnets électroluminescents 108 de dimensions submillimétriques, que l'on appellera par la suite bâtonnets électroluminescents. Ces bâtonnets électroluminescents 108 prennent naissance sur un même substrat 110. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AlGaN), ou à partir d'un alliage d'aluminium, d'indium et de gallium (AlInGaN).

Le substrat 110 présente une face inférieure 112, sur laquelle est rapportée une première électrode 114, et une face supérieure 116, en saillie de laquelle s'étendent les bâtonnets électroluminescents 108 et sur laquelle est rapportée une deuxième électrode 118. Différentes couches de matériaux sont superposées sur la face supérieure 116, notamment après la croissance des bâtonnets électroluminescents depuis le substrat ici obtenu par une approche ascendante. Parmi ces différentes couches, on peut trouver au moins une couche de matériau conducteur électriquement, afin de permettre l'alimentation électrique des bâtonnets. Cette couche est gravée de manière à relier tel ou tel bâtonnet entre eux, l'allumage de ces bâtonnets pouvant alors être commandé simultanément par un module de pilotage ici non représenté. On pourra prévoir qu'au moins deux bâtonnets électroluminescents ou au moins deux groupes de bâtonnets électroluminescents de la source de lumière à semi-conducteur sont agencés pour être allumés de manière distincte par l'intermédiaire d'un système de contrôle de l'allumage.

Les bâtonnets électroluminescents de dimensions submillimétriques s'étirent depuis le substrat et comportent, tel que cela est visible sur la figure 3, chacun un noyau 119 en nitrure de gallium, autour duquel sont disposés des puits quantiques 120 formés par une superposition radiale de couches de matériaux différents, ici du nitrure de gallium et du nitrure de gallium-indium, et une coque 121 entourant les puits quantiques également réalisée en nitrure de gallium.

Chaque bâtonnet s'étend selon un axe longitudinal 122 définissant sa hauteur, la base 123 de chaque bâtonnet étant disposée dans un plan 124 de la face supérieure 116 du substrat 110.

Les bâtonnets électroluminescents 108 de la source de lumière à semi-conducteur présentent avantageusement la même forme. Ces bâtonnets sont chacun délimités par une face terminale 126 et par une paroi circonférentielle 128 qui s'étend le long de l'axe longitudinal. Lorsque les bâtonnets électroluminescents sont dopés et font l'objet d'une polarisation, la lumière résultante en sortie de la source à semi-conducteur est émise principalement à partir de la paroi circonférentielle 128, étant entendu que l'on peut prévoir que de des rayons lumineux sortent également, au moins en petite quantité, à partir de la face terminale 126. Il en résulte que chaque bâtonnet agit comme une unique diode électroluminescente et que la densité des bâtonnets électroluminescents 108 améliore le rendement lumineux de cette source à semi-conducteur.

La paroi circonférentielle 128 d'un bâtonnet 108, correspondant à la coquille de nitrure de gallium, est recouverte par une couche d'oxyde conducteur transparent (OCT) 129 qui forme l'anode de chaque bâtonnet complémentaire à la cathode formée par le substrat. Cette paroi circonférentielle 128 s'étend le long de l'axe longitudinal 122 depuis le substrat 110 jusqu'à la face terminale 126, la distance de la face terminale 126 à la face supérieure 116 du substrat, depuis laquelle prennent naissance les bâtonnets électroluminescents 108, définissant la hauteur de chaque bâtonnet. A titre d'exemple, on prévoit que la hauteur d'un bâtonnet électroluminescent 108 est comprise entre 1 et 10 micromètres, tandis que l'on prévoit que la plus grande dimension transversale de la face terminale, perpendiculairement à l'axe longitudinal 122 du bâtonnet électroluminescent concerné, soit inférieure à 2 micromètres. On pourra également prévoir de définir la surface d'un bâtonnet, dans un plan de coupe perpendiculaire à cet axe longitudinal 122, dans une plage de valeurs déterminées, et notamment entre 1.96 et 4 micromètres carrés.

On comprend que lors de la formation des bâtonnets 108, la hauteur peut être modifiée d'une partie à l'autre d'une même source de lumière, de manière à accroitre la luminance de telle ou telle partie de la source de lumière à semi-conducteur, étant entendu que la luminance augmente lorsque la hauteur des bâtonnets est augmentée.

La forme des bâtonnets électroluminescents 108 peut également varier d'une partie à l'autre d'une même source de lumière, notamment au regard de la section des bâtonnets et/ou de la forme de la face terminale 126. Il a été illustré sur la figure 3 des bâtonnets électroluminescents présentant une forme générale cylindrique, et notamment de section polygonale, ici plus particulièrement hexagonale. On comprend qu'il importe que de la lumière puisse être émise à travers la paroi circonférentielle, que celle-ci présente une forme polygonale ou circulaire par exemple.

Par ailleurs, la face terminale 126 peut présenter une forme sensiblement plane et perpendiculaire à la paroi circonférentielle, de sorte qu'elle s'étend sensiblement parallèlement à la face supérieure 116 du substrat 110, tel que cela est illustré sur la figure 3, ou bien elle peut présenter une forme bombée ou en pointe en son centre, de manière à multiplier les directions d'émission de la lumière sortant de cette face terminale, tel que cela est illustré sur la figure 5.

Sur les figures 3 et 4, les bâtonnets électroluminescents 108 sont agencés en matrice à deux dimensions, avec des bâtonnets alignés en rangées et en colonnes perpendiculaires les unes par rapport aux autres. Cet agencement pourrait être tel que les bâtonnets électroluminescents soient agencés en quinconce. L'invention couvre d'autres répartitions des bâtonnets, avec notamment des densités de bâtonnets qui peuvent être variables selon différentes parties d'une même source de lumière. On a représenté schématiquement sur la figure 4 la distance de séparation d1 de deux bâtonnets électroluminescents immédiatement adjacents dans une première direction transversale et la distance de séparation d2 de deux bâtonnets électroluminescents immédiatement adjacentes dans une deuxième direction transversale. Les distances de séparation d1 et d2 sont mesurées entre deux axes longitudinaux 122 de bâtonnets électroluminescents adjacents. Tel que cela a été précisé précédemment, le nombre de bâtonnets électroluminescents 108 s'étendant en saillie du substrat 110 peut varier d'une partie à l'autre d'une source de lumière, notamment pour augmenter la densité lumineuse de telle ou telle partie de cette source de lumière, mais on convient que l'une ou l'autre des distances de séparation d1, d2 doit être au minimum égale à 2 micromètres, afin que la lumière émise par la paroi circonférentielle 128 de chaque bâtonnet électroluminescent 108 puisse sortir de la matrice de bâtonnets. Par ailleurs, on prévoit que ces distances de séparation ne soient pas supérieures à 100 micromètres.

La source de lumière peut comporter en outre, tel qu'illustré notamment sur la figure 5, une couche 130 d'un matériau polymère formant un encapsulant dans laquelle des bâtonnets électroluminescents 108 sont au moins partiellement noyés. La couche 130 peut ainsi s'étendre sur toute l'étendue du substrat ou seulement autour d'un groupe déterminé de bâtonnets électroluminescents 108. Le matériau polymère, qui peut notamment être à base de silicone, permet de protéger les bâtonnets électroluminescents 108 sans gêner la diffusion des rayons lumineux.

La source de lumière peut comporter en outre un revêtement 132 de matériau réfléchissant la lumière qui est disposé entre les bâtonnets électroluminescents 108 pour dévier les rayons, initialement orientés vers le substrat, vers la face terminale 126 des bâtonnets électroluminescents 108. En d'autres termes, la face supérieure 116 du substrat 110 peut comporter un moyen réfléchissant qui renvoie les rayons lumineux, initialement orientés vers la face supérieure 116, vers la face de sortie de la source de lumière. On récupère ainsi des rayons qui autrement seraient perdus. Ce revêtement 132 est disposé entre les bâtonnets électroluminescents 108 sur la couche d'oxyde conducteur transparent 129.

Comme mentionné ci-dessus, la source de lumière 102 est pilotée par un module de commande 101. Le module de commande comprend une unité de calcul et une unité de mémorisation non représentées sur les figures. L'unité de mémorisation est configurée pour mémoriser au moins un programme de pilotage de la source de lumière 102 et un programme de pilotage du dispositif de traitement de lumière 200. L'unité de calcul est configurée pour mettre en œuvre simultanément ces programmes, de manière à corréler le fonctionnement de la source de lumière 102 et du dispositif de traitement de lumière 200.

Pour cela, le module de commande 101 est configuré pour activer sélectivement un élément émissif 134 de la source de lumière 102, l'élément émissif 134 pouvant être constitué d'un unique bâtonnet électroluminescent, ou comme illustré sur la figure 4, d'une pluralité de bâtonnets électroluminescents connectés électriquement entre eux. Dans ce dernier cas, l'activation d'un élément émissif 134 consiste en l'activation simultanée de tous les bâtonnets 108, présents dans une zone délimitée par des lignes de démarcation 137, par l'intermédiaire d'une unique instruction du module de contrôle 101. On a représenté sur la figure 4 la distance de séparation d3, dans la première direction transversale, entre un bâtonnet d'un premier élément émissif 134 et un bâtonnet directement adjacent d'un deuxième élément émissif. On convient que cette distance de séparation d3, mesurée entre deux axes longitudinaux de bâtonnets électroluminescents, doit être au minimum égale à 2 micromètres, afin que la lumière émise par la paroi circonférentielle 128 de chaque bâtonnet 108 puisse sortir de la matrice de bâtonnets électroluminescents, et on cherche à avoir une distance de séparation d3 entre deux bâtonnets de deux zones différentes qui est sensiblement égale à la distance de séparation d1 ou d2 de deux bâtonnets d'une même zone de la source de lumière. Chaque élément émissif 134 ainsi démarqué est configuré pour émettre un faisceau lumineux directif. Lorsque le ou les bâtonnets 108 correspondants à un élément émissif sont éteints, une zone sombre apparait sur la surface d'émission de la source de lumière 102.

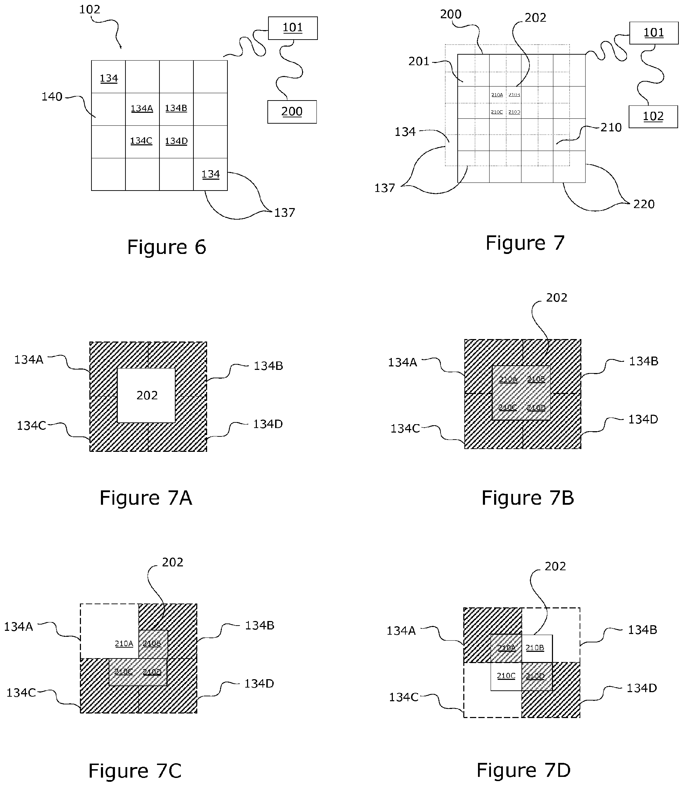

La source de lumière 102 peut prendre plusieurs formes sans sortir du contexte de l'invention, dès lors qu'elle présente une pluralité d'éléments émissifs 134 qui sont activables sélectivement et indépendamment des unes des autres par le module de commande 101. Selon le présent exemple illustré à la figure 6, la source de lumière 102 présente une forme sensiblement carrée, comprenant une multitude d'éléments émissifs 134 identiques, c'est-à-dire comportant un nombre égal de bâtonnets, séparés par des lignes de démarcation 137, agencés en lignes et colonnes de manière à former une matrice 140 homogène d'éléments émissifs 134.

La source de lumière est agencée dans le module lumineux 10 de manière à éclairer le dispositif de traitement de lumière 200. Selon présent exemple, le dispositif de traitement de lumière 200 est du type LCD (d'après l'acronyme signifiant en anglais « Liquid Crystal Display ») configuré pour transmettre un faisceau lumineux formant une image pixélisée. Pour cela, comme illustré à la figure 7, le dispositif de traitement de lumière 200 comporte une matrice 201 d'éléments actifs 202, chaque élément actif correspondant à un bloc de cristaux liquides formant une zone active. Chaque élément actif 202 est apte à prendre une position active dans laquelle il peut transmettre la lumière émise par la source de lumière 102 en direction de la première optique 106 de mise en forme, et une position passive dans laquelle il peut stopper la lumière émise par la source de lumière 102. Chaque élément actif 202 est activable ou désactivable, indépendamment des autres, par le module de commande 101.

Selon l'invention, la source de lumière 102 et le dispositif de traitement de la lumière 200 sont agencés l'un par rapport à l'autre dans le module lumineux 10 de sorte que leur matrice respective d'éléments émissifs et d'éléments actifs sont décalées, de manière à ce que seule une partie des rayons émis par un élément émissif rencontre un élément actif, et que le cas échéant, les rayons émis par chaque élément émissif 134 participent à éclairer plusieurs éléments actifs 202, ici quatre. Plus précisément, la source de lumière 102 est positionnée en vis-à-vis de la matrice 201 de sorte que chaque élément émissif 134 projette un faisceau lumineux éclairant une partie seulement de quatre élément actifs 202 adjacents. Ainsi, comme représenté à la figure 7, les éléments émissifs 134 placés derrière la matrice 201 et représentés en lignes pointillées, sont agencés et configurés pour que l'image projetée par chaque élément émissif éclaire une zone 210 sur la matrice 201, délimitée par des lignes de démarcation 220. Chaque zone 210 chevauche au moins une partie d'un élément actif 202, délimité par des lignes de démarcations 220 représentées en lignes pleines. Par exemple, l'élément actif 202 indiqué sur la figure 7 est divisé en quatre zones 210A, 210B, 210C et 210D, chaque zone correspondant à une partie de la surface de projection d'un faisceau lumineux émis par un élément émissif distinct comme expliqué ci-après. En d'autres termes, comme illustré sur la figure 7, les matrices des éléments émissifs 134 et des éléments actifs 202 sont agencées en vis-à-vis de sorte que la projection des lignes de démarcation 137 des éléments actifs 134 sur la matrice 200 des éléments actifs ne se superpose pas aux lignes de démarcation 220 des éléments actifs 202 qui la composent.

Selon le présent exemple, les zones 210 sont de même forme et de mêmes dimensions que les éléments actifs 201. Bien entendu, il pourrait en être autrement selon un autre mode de réalisation de l'invention.

Les figures 7A à 7D illustrent à présent un exemple de fonctionnement d'un module lumineux 10 selon l'invention, plus précisément le fonctionnement d'un élément actif 202 éclairé par quatre éléments émissifs adjacents. Afin de faciliter la compréhension de l'invention, seul un élément actif 202 est représenté, placé devant l'image projetée de quatre éléments émissifs 134A à 134D. Bien entendu, cet élément actif est en théorie entouré d'autres éléments actifs afin de former la matrice 201 d'éléments actifs illustré à la figure 7.

Lorsque le module de commande 101 active les quatre éléments émissifs 134A à 134D adjacents, ces derniers éclairent chacun et respectivement quatre zones distinctes 210Aà 210D d'un même élément actif 202.

Il est à noter que sur les figures 7A à 7D la lumière est représentée par des zones hachurées. Lorsque le module de commande désactive cet élément actif 202, aucun faisceau lumineux émis par ces éléments émissifs n'est transmis par l'élément actif 202, vers la première optique 106 de mise en forme. Autrement dit et comme représenté à la figure 7A, l'élément actif 202, qui est en travers d'une partie de l'image projetée par chacun des quatre éléments émissifs, occulte une partie de la lumière envoyée par chacun de ces quatre éléments émissifs. De ce fait, l'image projetée par le module lumineux 10 comporte une zone sombre correspondant à l'élément actif 202. À l'inverse comme illustré à la figure 7B, lorsque le module de commande active l'élément actif 202, une partie des faisceaux lumineux émis par les éléments émissifs 134A à 134D, est transmis par le module lumineux 10. La zone sombre précédente devient alors claire. À présent, comme illustré à la figure 7C, le module de commande 101 désactive l'élément émissif 134A. La zone 210A de l'élément actif 202 n'est donc plus éclairée, ce qui se traduit par l'apparition dans la zone claire d'une tâche noire correspondant à un pixel de l'image pixélisée. Cette zone sombre peut être agrandie dans une direction longitudinale ou transversale par le module de commande 101, en désactivant l'élément émissif 134B ou 134C, de sorte que la zone 210B ou 210C de l'élément actif 202 ne soit également plus éclairée. Selon une alternative illustrée à la figure 7D, le module de commande peut activer uniquement les éléments émissif 134A et 134D de manière à éclairer seulement les zones 210A et 210D de l'élément actif 202, de manière à former une image pixélisée comprenant quatre pixels distincts, dont deux clairs et deux sombres.

On comprend donc selon l'exemple ci-dessus, que l'invention permet de modifier sélectivement et indépendamment quatre pixels d'une image pixélisée, sans qu'il soit pour cela nécessaire au module de commande 101 d'activer un élément actif 202. De ce fait, grâce à l'invention, la formation d'un pixel dans une image pixélisée ne nécessite plus l'activation d'un élément actif 202 correspondant spécifiquement. En effet, en activant un seul élément actif 202, on peut former un ou plusieurs pixels en activant un ou plusieurs éléments émissifs 134 éclairant ledit élément actif 202. Ainsi, par rapport au dispositif de l'état de la technique décrit ci-dessus, pour une résolution d'image identique, l'invention permet avantageusement d'utiliser moins d'éléments actifs 202 et cela permet tel que cela a pu être présenté d'obtenir des dispositifs moins coûteux et/ou pour lesquels on diminue le risque de défaillance de ces éléments actifs.

On a représenté sur la figure 2 un dispositif de traitement 200 qui est agencé à distance de la source de lumière, et qui est configuré pour être traversé par les rayons émis par cette source de lumière. Selon une variante de réalisation non illustrée, la source de lumière 102 peut être accolée à la matrice des éléments actifs afin de diminuer l'encombrement du module lumineux 10.

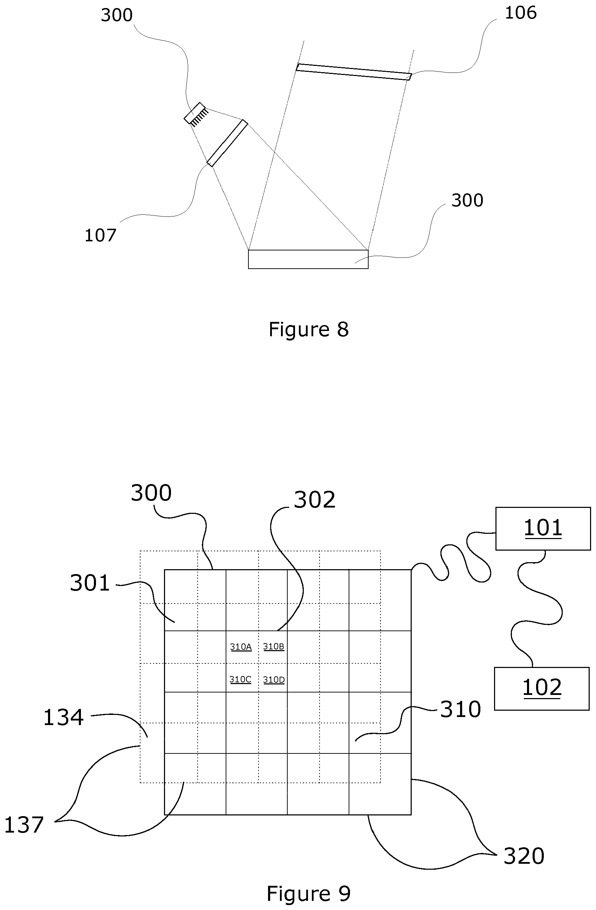

Un deuxième mode de réalisation de l'invention va être maintenant décrit, en référence à la figure 8, dans lequel le dispositif de traitement de lumière 300 est du type DMD (d'après l'acronyme signifiant en anglais « Digital Mirror Device ») configuré pour projeter un faisceau lumineux formant une image pixélisée et différent donc du dispositif de traitement du premier mode de réalisation en ce qu'il présente des propriétés réfléchissantes des rayons vers la première optique de mise en forme 106 au lieu des propriétés réfractrices dans le premier mode de réalisation. De fait, selon ce deuxième mode de réalisation, la source de lumière est positionnée par rapport au dispositif de traitement de lumière, du même côté que la première optique 106, alors que dans le premier mode de réalisation, la source de lumière et la première optique 106 de mise en forme sont disposés de part et d'autre du dispositif de traitement de lumière.

Dans ce deuxième mode de réalisation, le dispositif de traitement de lumière 300 comporte une matrice 301 d'éléments actifs 302, chaque élément actif correspondant à un micromiroir mobile. Chaque micromiroir est monté pivotant autour d'un axe, entre une position active dans laquelle le micromiroir réfléchit la lumière émise par la source de lumière 102 en direction de la première optique 106 de mise en forme, et une position passive dans laquelle le micromiroir réfléchit ladite lumière en direction d'un élément absorbeur de rayonnement lumineux non représenté sur les figures. Chaque micromiroir est pilotable en rotation, indépendamment des uns des autres, par le module de commande 101. Dans l'exemple illustré, toutefois non limitatif, la matrice d'éléments actifs 301 est de forme carrée et délimitée par 500 à 1500 micromiroirs ou éléments actifs 302 sur chacun de ses côtés, et chaque micromiroir présente une taille de l'ordre de 7 à 10 micromètres.

Conformément à l'invention, la source de lumière 102 est agencée dans le module lumineux 10 de manière à ce que les éléments émissifs 134 qui le composent soient activables sélectivement et qu'au moins un élément émissif 134 de la source de lumière, c'est-à-dire un bâtonnet ou un ensemble de bâtonnets connectés électriquement entre eux, éclaire une pluralité de micromiroirs 301, ici quatre. Plus précisément, la source de lumière 102 est positionnée par rapport à la matrice 301 d'éléments actifs 302 de sorte que chaque élément émissif 134 projette un faisceau lumineux dont une partie seulement éclaire un micromiroir, et/ou dont le faisceau global éclaire une partie seulement de quatre micromiroirs.

Le pilotage des éléments émissifs et des éléments actifs est dans ce deuxième mode de réalisation le même que celui décrit pour le premier mode de réalisation notamment en référence aux figures 7A à 7D, de sorte qu'on saura appliquer les enseignements précédemment évoqués en pilotant cette fois la rotation des micromiroirs d'une première position à l'autre au lieu de piloter l'activation ou la désactivation des cristaux liquides.

Conformément à ce qui a été décrit précédemment, grâce à l'invention, la formation d'un pixel dans une image pixélisée dans ce deuxième mode de réalisation ne nécessite plus l'activation d'un micromiroir correspondant spécifiquement. En effet, en activant un micromiroir, on peut former un ou plusieurs pixels en activant un ou plusieurs éléments émissifs 134 éclairant ce micromiroir 302. Ainsi, par rapport au dispositif de l'état de la technique décrit ci-dessus, pour une résolution d'image identique, l'invention permet avantageusement d'utiliser moins de micromiroirs et cela permet tel que cela a pu être présenté d'obtenir des dispositifs moins coûteux et/ou pour lesquels on diminue le risque de défaillance de ces éléments actifs.

Le module lumineux peut comprendre une deuxième optique 107 de mise en forme, positionnée entre la source de lumière 102 et le dispositif de traitement de lumière 300. La deuxième optique 107 vise à étendre la surface de projection du faisceau lumineux, et le cas échéant à redresser le faisceau émis par la source de lumière, de sorte que la source de lumière 102 puisse éclairer l'ensemble de la matrice d'éléments actifs, lorsque ses dimensions sont inférieures à celles de la matrice 301 d'éléments actifs 302. En d'autres termes, la deuxième optique 107 est configurée pour effectuer soit un grandissement homothétique si le rapport d'aspect des sources et des éléments actifs est identique, soit une anamorphose si ce n'est pas le cas.

## Revendications

1. Module lumineux (10) pour un véhicule automobile, configuré pour projeter un faisceau lumineux formant une image pixélisée, comprenant une source de lumière (102) et un dispositif de traitement de la lumière (200, 300) émise par la source de lumière (102), le dispositif de traitement (200, 300) comportant une matrice (201, 301) d'éléments actifs (202, 302), configurés pour traiter au moins une partie du faisceau lumineux émis par la source de lumière (102) de manière à former l'image pixellisée, **caractérisé en ce que** la source de lumière (102) comporte une matrice d'éléments émissifs (134), parmi lesquels au moins deux éléments émissifs sont activables sélectivement et **en ce que** la matrice (140) d'éléments émissifs (134) et la matrice (201, 301) d'éléments actifs (202, 302) sont décalées l'une par rapport à l'autre, de manière à ce que chaque élément actif (202, 302) est agencé en travers d'une partie du faisceau lumineux émis par un élément émissif (134).

2. Module lumineux (10) pour véhicule automobile selon la revendication précédente, **caractérisé en ce que** chaque élément émissif (134) est configuré pour éclairer au moins deux éléments actifs (202, 302) adjacents.

3. Module lumineux (10) pour véhicule automobile selon l'une des revendications précédentes, **caractérisé en ce que** la surface de la matrice (140) d'éléments émissifs (134) est plus grande que la surface de la matrice (201, 301) d'éléments actifs (202, 302).

4. Module lumineux (10) pour véhicule automobile selon l'une des revendications précédentes, **caractérisé en ce que** la surface d'au moins un élément émissif (134) est égale à la surface d'au moins un élément actif (202,302).

5. Module lumineux (10) pour véhicule automobile selon l'une des revendications précédentes, **caractérisé en ce que** la surface de projection, sur le dispositif de traitement (200, 300), d'un faisceau lumineux émis par un élément émissif (134) est égale à la surface d'au moins un élément actif (202, 302).

6. Module lumineux (10) pour véhicule automobile selon l'une des revendications précédentes, **caractérisé en ce que** le module lumineux (10) comprend une première optique (106) de projection agencée en vis-à-vis de la matrice (301) d'éléments actifs (302), de manière à projeter l'image pixélisée à l'extérieur du dispositif (10).

7. Module lumineux (10) pour véhicule automobile selon l'une des revendications précédentes, **caractérisé en ce qu'**au moins un élément actif (302) réfléchit une partie du faisceau lumineux émis par un élément émissif (134).

8. Module lumineux (10) pour véhicule automobile selon l'une des revendications 1 à 6, **caractérisé en ce qu'**au moins un élément actif (302) est configuré pour réfracter une partie du faisceau lumineux émis par un élément émissif (134).

9. Module lumineux (10) pour véhicule automobile selon l'une des revendications précédentes, **caractérisé en ce que** le module lumineux (10) comprend une deuxième optique (107) de projection agencée entre la source de lumière (102) et le dispositif de traitement (300), de manière à projeter sur la matrice (301) d'éléments actifs (302) au moins une partie de la lumière émise par la source de lumière (102).

10. Module lumineux (10) pour véhicule automobile selon l'une des revendications précédentes, **caractérisé en ce que** le module lumineux (10) comprend un module de commande (101) configuré pour piloter simultanément l'allumage et/ou l'extinction des éléments émissifs (134) d'une part, et d'autre part configuré pour activer et/ou désactiver les éléments actifs (202, 302) du dispositif de traitement (200, 300).

11. Module lumineux pour véhicule automobile selon l'une des revendications précédentes, **caractérisé en ce que** chaque élément émissif (134) comprend une pluralité de bâtonnets électroluminescents (108) de dimensions submillimétriques pour émettre un faisceau lumineux.

12. Module lumineux (10) pour véhicule automobile selon la revendication précédente, **caractérisé en ce que** les bâtonnets électroluminescents (108) s'étendent en saillie d'un substrat (110), et ils peuvent notamment être formés directement sur ce substrat (110).

13. Dispositif lumineux de véhicule automobile comportant un module lumineux (10) selon l'une des revendications précédentes.

## Patentansprüche

1. Leuchtmodul (10) für ein Kraftfahrzeug, das konfiguriert ist, einen ein gepixeltes Bild formenden Lichtstrahl zu projizieren, das eine Lichtquelle (102) und eine Verarbeitungsvorrichtung des von der Lichtquelle (102) emittierten Lichts (200, 300) enthält, wobei die Verarbeitungsvorrichtung (200, 300) eine Matrix (201, 301) aktiver Elemente (202, 302) aufweist, die konfiguriert sind, mindestens einen Teil des von der Lichtquelle (102) emittierten Lichtstrahls zu verarbeiten, um das gepixelte Bild zu formen, **dadurch gekennzeichnet, dass** die Lichtquelle (102) eine Matrix emittierender Elemente (134) aufweist, von denen mindestens zwei emittierende Elemente selektiv aktivierbar sind, und dass die Matrix (140) emittierender Elemente (134) und die Matrix (201, 301) aktiver Elemente (202, 302) zueinander so versetzt sind, dass jedes aktive Element (202, 302) quer zu einem Teil des von einem emittierenden Element (134) emittierten Lichtstrahls angeordnet ist.

2. Leuchtmodul (10) für ein Kraftfahrzeug nach dem vorhergehenden Anspruch, **dadurch gekennzeichnet, dass** jedes emittierende Element (134) konfiguriert ist, mindestens zwei benachbarte aktive Elemente (202, 302) zu beleuchten.

3. Leuchtmodul (10) für ein Kraftfahrzeug nach einem der vorhergehenden Ansprüche, **dadurch gekennzeichnet, dass** die Fläche der Matrix (140) emittierender Elemente (134) größer ist als die Fläche der Matrix (201, 301) aktiver Elemente (202, 302).

4. Leuchtmodul (10) für ein Kraftfahrzeug nach einem der vorhergehenden Ansprüche, **dadurch gekennzeichnet, dass** die Fläche mindestens eines emittierenden Elements (134) gleich der Fläche mindestens eines aktiven Elements (202, 302) ist.

5. Leuchtmodul (10) für ein Kraftfahrzeug nach einem der vorhergehenden Ansprüche, **dadurch gekennzeichnet, dass** die Projektionsfläche eines von einem emittierenden Element (134) emittierten Lichtstrahls auf der Verarbeitungsvorrichtung (200, 300) gleich der Fläche mindestens eines aktiven Elements (202, 302) ist.

6. Leuchtmodul (10) für ein Kraftfahrzeug nach einem der vorhergehenden Ansprüche, **dadurch gekennzeichnet, dass** das Leuchtmodul (10) eine erste Projektionsoptik (106) enthält, die gegenüber der Matrix (301) aktiver Elemente (302) angeordnet ist, um das gepixelte Bild nach außerhalb der Vorrichtung (10) zu projizieren.

7. Leuchtmodul (10) für ein Kraftfahrzeug nach einem der vorhergehenden Ansprüche, **dadurch gekennzeichnet, dass** mindestens ein aktives Element (302) einen Teil des von einem emittierenden Element (134) emittierten Lichtstrahls reflektiert.

8. Leuchtmodul (10) für ein Kraftfahrzeug nach einem der Ansprüche 1 bis 6, **dadurch gekennzeichnet, dass** mindestens ein aktives Element (302) konfiguriert ist, einen Teil des von einem emittierenden Element (134) emittierten Lichtstrahls zu brechen.

9. Leuchtmodul (10) für ein Kraftfahrzeug nach einem der vorhergehenden Ansprüche, **dadurch gekennzeichnet, dass** das Leuchtmodul (10) eine zweite Projektionsoptik (107) enthält, die zwischen der Lichtquelle (102) und der Verarbeitungsvorrichtung (300) angeordnet ist, um mindestens einen Teil des von der Lichtquelle (102) emittierten Lichts auf die Matrix (301) aktiver Elemente (302) zu projizieren.

10. Leuchtmodul (10) für ein Kraftfahrzeug nach einem der vorhergehenden Ansprüche, **dadurch gekennzeichnet, dass** das Leuchtmodul (10) ein Steuermodul (101) enthält, das einerseits konfiguriert ist, gleichzeitig das Ein- und/oder Ausschalten der emittierenden Elemente (134) zu steuern, und andererseits konfiguriert ist, die aktiven Elemente (202, 302) der Verarbeitungsvorrichtung (200, 300) zu aktivieren und/oder zu deaktivieren.

11. Leuchtmodul für ein Kraftfahrzeug nach einem der vorhergehenden Ansprüche, **dadurch gekennzeichnet, dass** jedes emittierende Element (134) eine Vielzahl von elektrolumineszenten Stäbchen (108) von submillimetrischen Abmessungen enthält, um einen Lichtstrahl zu emittieren.

12. Leuchtmodul (10) für ein Kraftfahrzeug nach dem vorhergehenden Anspruch, **dadurch gekennzeichnet, dass** die elektrolumineszenten Stäbchen (108) sich von einem Substrat (110) vorstehend erstrecken und insbesondere direkt auf diesem Substrat (110) geformt sein können.

13. Leuchtvorrichtung eines Kraftfahrzeugs, die ein Leuchtmodul (10) nach einem der vorhergehenden Ansprüche aufweist.

## Claims

1. Lighting module (10) for a motor vehicle, configured to project a light beam forming a pixelized image, comprising a light source (102) and a device (200, 300) for processing the light emitted by the light source (102), the processing device (200, 300) including a matrix (201, 301) of active elements (202, 302) configured to process at least a portion of the light beam emitted by the light source (102) in such a manner as to form the pixelized image, **characterized in that** the light source (102) includes a matrix of emissive elements (134) of which at least two emissive elements can be activated selectively and **in that** the matrix (140) of emissive elements (134) and the matrix (201, 301) of active elements (202, 302) are offset relative to one another in such a manner that each active element (202, 302) is arranged across a portion of the light beam emitted by an emissive element (134).

2. Motor vehicle lighting module (10) according to the preceding claim, **characterized in that** each emissive element (134) is configured to light at least two adjacent active elements (202, 302).

3. Motor vehicle lighting module (10) according to either one of the preceding claims, **characterized in that** the surface area of the matrix (140) of emissive elements (134) is greater than the surface area of the matrix (201, 301) of active elements (202, 302).

4. Motor vehicle lighting module (10) according to any one of the preceding claims, **characterized in that** the surface area of at least one emissive element (134) is equal to the surface area of at least one active element (202, 302).

5. Motor vehicle lighting module (10) according to any one of the preceding claims, **characterized in that** the surface area projected onto the processing device (200, 300), of a light beam emitted by an emissive element (134) is equal to the surface area of at least one active element (202, 302).

6. Motor vehicle lighting module (10) according to any one of the preceding claims, **characterized in that** the lighting module (10) comprises a first projection optic (106) arranged facing the matrix (301) of active elements (302), in such a manner as to project the pixelized image outside the device (10).

7. Motor vehicle lighting module (10) according to any one of the preceding claims, **characterized in that** at least one active element (302) reflects a portion of the light beam emitted by an emissive element (134).

8. Motor vehicle lighting module (10) according to any one of Claims 1 to 6, **characterized in that** at least one active element (302) is configured to refract a portion of the light beam emitted by an emissive element (134).

9. Motor vehicle lighting module (10) according to any one of the preceding claims, **characterized in that** the lighting module (10) comprises a second projection optic (107) arranged between the light source (102) and the processing device (300), in such a manner as to project onto the matrix (301) of active elements (302) at least a portion of the light emitted by the light source (102).

10. Motor vehicle lighting module (10) as claimed in any one of the preceding claims, **characterized in that** the lighting module (10) comprises a control module (101) configured to control simultaneously the lighting and/or the extinction of the emissive elements (134) and to activate and/or deactivate the active elements (202, 302) of the processing device (200, 300).

11. Motor vehicle lighting module according to any one of the preceding claims, **characterized in that** each emissive element (134) comprises a plurality of submillimetre electroluminescent rods (108) for emitting a light beam.

12. Motor vehicle lighting module (10) according to the preceding claim, **characterized in that** the electroluminescent rods (108) project from a substrate (110), and may in particular be formed directly on that substrate (110).

13. Motor vehicle lighting device including a lighting module (10) according to any one of the preceding claims.
